(19) Europäisches Patentamt
European Patent Office
Office européen des brevets

(11) **EP 4 318 472 A1**

(12) **EUROPEAN PATENT APPLICATION**

(43) Date of publication:
**07.02.2024 Bulletin 2024/06**

(21) Application number: **22189150.0**

(22) Date of filing: **05.08.2022**

(51) International Patent Classification (IPC):
***G10L 21/013*** (2013.01)

(52) Cooperative Patent Classification (CPC):
**G10L 21/013;** G10L 2021/0135

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fraunhofer-Gesellschaft zur Förderung
der angewandten Forschung e.V.
80686 München (DE)**
• **Friedrich-Alexander-Universität
Erlangen-Nürnberg
91054 Erlangen (DE)**

(72) Inventors:
• **GAZNEPOGLU, Ünal Ege
91058 Erlangen (DE)**
• **PETERS, Nils
91054 Erlangen (DE)**
• **LESCHANOWKSY, Anna
91058 Erlangen (DE)**

(74) Representative: **Schairer, Oliver Michael et al
Schoppe, Zimmermann, Stöckeler
Zinkler, Schenk & Partner mbB
Patentanwälte
Radlkoferstraße 2
81373 München (DE)**

(54) **SYSTEM AND METHOD FOR VOICE MODIFICATION**

(57)    A system for conducing voice modification on an audio input signal comprising speech to obtain an audio output signal according to an embodiment is provided. The system comprises a feature extractor (210) for extracting feature information of the speech from the audio input signal. Moreover, the system comprises a fundamental frequencies generator (230) to generate modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech. Furthermore, the system comprises a synthesizer (240) for generating the audio output signal depending on the modified fundamental frequency information and depending on the feature information.

Fig. 1

**Description**

The present invention relates to voice modification, and, in particular, to a system and a method for voice modification.

With increasing public awareness of privacy concerns, voice modification, in particular, voice anonymization, is of particular interest, see, e.g., [2]. To address privacy concerns, for example, with respect to voice recordings in smart speakers and, for example, with respect to voice recordings in other IoT scenarios, where speech signals are recorded, stored, and analyzed, voice anonymization may, e.g., be conducted. Moreover, technology to address to regulatory requirements regarding privacy (for example, the General Data Protection Regulation, GDPR) may, e.g., be needed. Voice anonymization or Avatar-adaptation for conversations in the metaverse are fields where voice anonymization is appreciated.

The introduction of the VoicePrivacy Challenge has stirred a multinational interest in design of voice anonymization systems. The introduced framework consists of baselines, evaluation metrics and attack models and has been utilized by researchers to improve voice anonymization.

Voice anonymization may, for example, be conducted by a voice processing block that modifies a speech signal, so that a voice recording cannot be traced back to the original speaker.

For example, an acoustic front-end anonymizes the speaker's character before exchanging data with a voice assistant service has been proposed (see [16])

In the prior art, a system for voice anonymization, referred to as baseline B1 system or as B1.a system has been provided in [1]. Further submissions mostly focused on changes to the individual blocks of the baselines. However, regardless of the individual modifications to this baseline by different groups, the obtained audio recordings are considered 'unnatural', see [2].

To improve anonymization performance as well as intelligibility, F0 modifications have been explored in the previous edition of the VoicePrivacy Challenge and subsequent works utilizing the challenge framework. Among the techniques investigated are creating a dictionary of F0 statistics (mean and variance) per identity and utilizing these for shifting and scaling the F0 trajectories [3], applying low-complexity DSP modifications [4] and applying functional principal component analysis (PCA) to get speaker-dependent parts [5].

BNs are extracted using a time delay neural network (TDNN) that actively prevents leaking of the speaker-dependent parts [6]. Thus, it is safe to assume that BNs do not contain immediately available speaker-dependent cues. x-vectors are returned as a single average per utterance or speaker, hence are hoped to have averaged out the effects of different linguistic content within the presented voice sample(s). Instead of supervisedly obtained PPGs, unsupervised representations are also used to represent individual sounds (see, e.g., [18]).

On the other hand, F0s are a complex combination of the identity of the speaker, the linguistic meaning, and the prosody, which also includes situational aspects such as emotions and speech rate [7]. Many speech synthesizers, notably the neural source-filters (NSFs), incorporate F0 trajectories as a parameter to control the initial excitation, mimicking the voice cords [8]. Thus, data-driven parts of the architectures have relatively little control over shaping the excitation.

The object of the present invention is to provide improved concepts for voice modification. The object of the present invention is solved by an system according to claim 1, by a method according to claim 19 and by a computer program according to claim 20.

A system for conducing voice modification on an audio input signal comprising speech to obtain an audio output signal according to an embodiment is provided. The system comprises a feature extractor for extracting feature information of the speech from the audio input signal. Moreover, the system comprises a fundamental frequencies generator to generate modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech. Furthermore, the system comprises a synthesizer for generating the audio output signal depending on the modified fundamental frequency information and depending on the feature information.

Moreover, a method for conducing voice modification on an audio input signal comprising speech to obtain an audio output signal according to an embodiment is provided. The method comprises:

- Extracting feature information of the speech from the audio input signal,

- Generating modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech.

And:

- Generating the audio output signal depending on the modified fundamental frequency information and depending on the feature information.

Furthermore, a computer program for implementing the above-described method when being executed on a computer or signal processor according to an embodiment is provided.

According to some embodiments, a fundamental frequency trajectory may, e.g., be derived from BN/PPG feature and from an anonymized x-Vector, e.g., on a frame-by-frame level, using neural network.

In some embodiments, a classification of voiced and unvoiced frames from BN/PPG features and from an anonymized x-Vector on a frame-by-frame level may, e.g., be conducted using a neural network.

Some embodiments relate to deriving fundamental frequencies (F0) from x-vectors and phonetic posteriorgrams (PPG) for voice modification, e.g., voice anonymization.

According to some embodiments, a (e.g., supervised) training of a neural network may, e.g., be conducted using F0 trajectories of speech signals as ground truth and BN/PPG features and x-vectors as input.

In some embodiments, a voice modification system, for example, with BN/PPG feature extraction and with x-Vector feature extraction, for example without F0 feature extraction, is provided.

According to an embodiment, a (possibly optional) manipulation (e.g., smoothing, modulation) of a derived F0 trajectory to further anonymize F0 may, e.g., be conducted.

Some embodiments provide a VoicePrivacy system description, which realizes speaker anonymization with feature-matched F0 Trajectories

According to an embodiment, a novel method to improve the performance of the VoicePrivacy Challenge 2022 baseline B1 variants is provided. Known deficiencies of x-vector-based anonymization systems include the insufficient disentangling of the input features. In particular, the fundamental frequency (F0) trajectories, which are used for voice synthesis without any modifications. Especially in cross-gender conversion, this situation causes unnatural sounding voices, increases word error rates (WERs), and personal information leakage.

Embodiments overcome the problems of the prior art by synthesizing an F0 trajectory, which better harmonizes with the anonymized x-vector.

Some embodiments utilize a low-complexity deep neural network to estimate an appropriate F0 value per frame, using the linguistic content from the bottleneck features (BN) and the anonymized x-vector. The inventive approach results in a significantly improved anonymization system and increased naturalness of the synthesized voice.

The present invention is inter alia based on the finding that anonymizing speech can be achieved by synthesizing one or more of the following three components, namely, the fundamental frequencies (F0) of the input speech, the phonetic posteriorgrams (also referred to as bottleneck feature, BN) and an anonymized x-vector.

Some embodiments are based on the finding that F0 trajectories contribute to anonymization and modifications are promising to improve the performance of the system.

Embodiments may, e.g., apply a correction to the F0 trajectories before the synthesis such that they match the BNs and x-vectors.

For some of the provided embodiments, F0 extraction is not required for voice anonymization.

In the following, embodiments of the present invention are described in more detail with reference to the figures, in which:

Fig. 1      illustrates a system for voice modification according to an embodiment.

Fig. 2      illustrates a system for voice anonymization according to an embodiment, which comprises a modifier.

Fig. 2a     illustrates a system for voice anonymization according to an embodiment, which comprises an anonymizer.

Fig. 2b     illustrates a system for voice de-anonymization according to an embodiment, which comprises a de-anonymizer.

Fig. 3      illustrates a system for voice anonymization according to a further embodiment, which comprises a fundamental frequencies generator being implemented as an F0 regressor.

Fig. 4      illustrates a deep neural network (DNN) for frame-wise predicting F0 trajectories according to an embodiment.

Fig. 5      illustrates a fully connected layer according to an embodiment.

Fig. 6      illustrates a system for voice anonymization according to another embodiment, which comprises a fundamental frequencies extractor.

Fig. 7      illustrates a table which depicts evaluation results for embodiments of the present invention.

Fig. 8      illustrates an LPC-based voice anonymization system according to the prior art.

Fig. 9      illustrates a voice anonymization system of the prior art that employs artificial intelligence concepts and that has been found beneficial.

Fig. 10     illustrates ground truth F0 estimates of a system of the prior art compared to the F0 estimates obtained by a system according to an embodiment.

Before embodiments of the present invention are described in detail, some background information is provided.

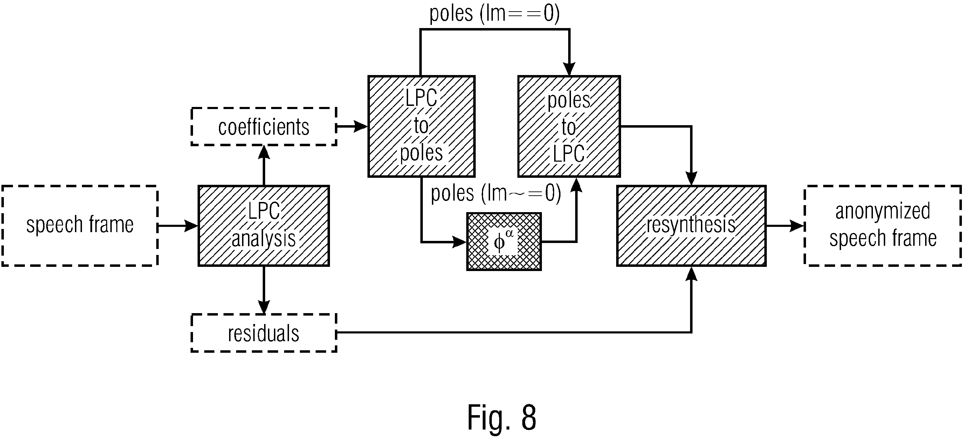

Fig. 8 illustrates an LPC-based voice anonymization system according to the prior art.

However, it has been found in the past that improved systems other than LPC-based voice anonymization systems would be provided.

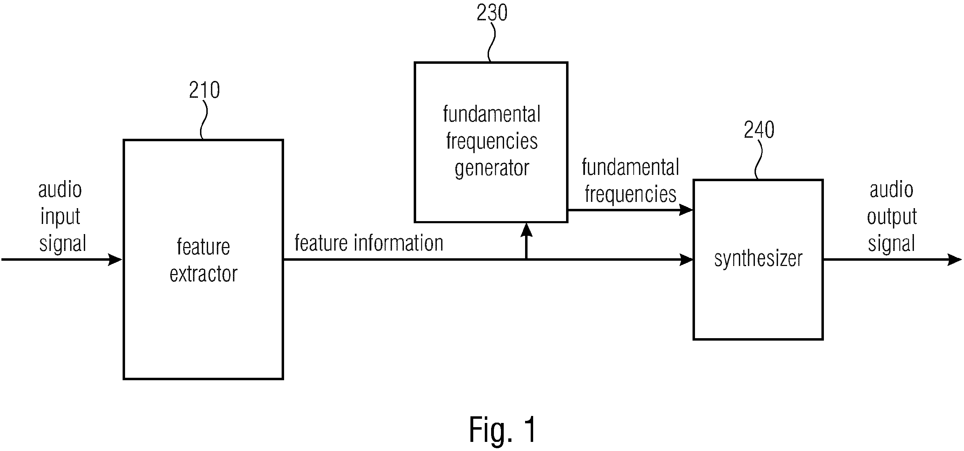

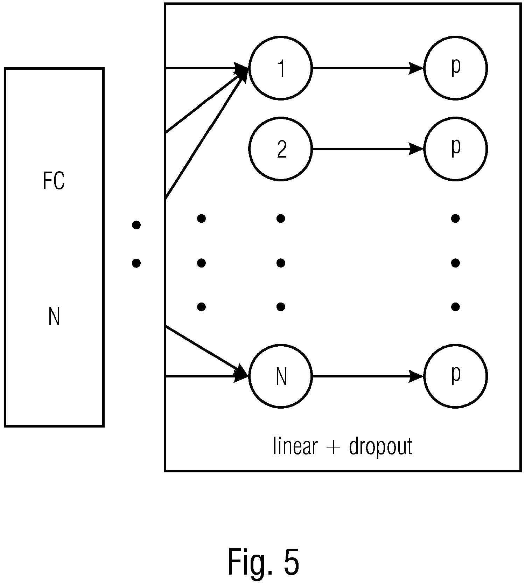

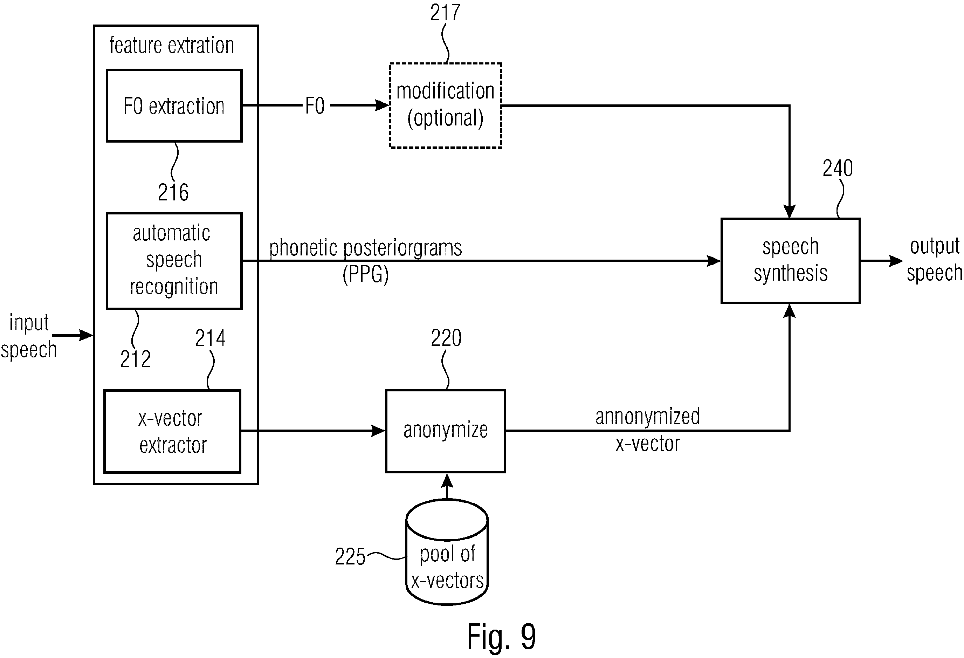

Fig. 9 illustrates a voice anonymization system of the prior art that employs artificial intelligence concepts and that has been found beneficial. Systems with same or similar structure are, for example, described in [1] and [2], see, for example, Fig. 1 of [1] and the corresponding portions of the paper, or, for example, Fig. 5 "Primary baseline anonymization system (B1)" of [2] and the corresponding description that relates to the primary baseline anonymization system in [2].

Basically, the system of Fig. 9 comprises an fundamental frequencies (F0) extraction module 216 for extracting the fundamental frequencies of the speech input, an automatic speech recognition module 212 for obtaining the phonetic posteriorgrams of the speech input and an x-vector extractor 214 for extracting the x-vector from the speech input.

The concept of extracting the x-vector from speech input using a neural network has been proposed in 2018 in [15]: Snyder et al. "X-Vectors: Robust DNN Embeddings for Speaker Recognition" and is now well-known for the skilled person. The content of that well-known paper, in particular its section 2, is hereby incorporated by reference. The resulting x-vector that is obtained depends on and characterizes the speech input. Also, [1] explains and employs in its chapter 3.1 the feature extraction in x-vectors, which is herein incorporated by reference.

As the system of Fig. 9 aims to anonymize voice, an anonymized x-vector is now generated in modifier 220. For this purpose, modifier 220 may employ a pool of (e.g., stored) x-vectors 225. The purpose of this anonymization is that the anonymized x-vector shall be (significantly) different from the x-vector that is obtained from the speech input. While different concepts may be employed, [1]: "Speaker Anonymization Using X-vector and Neural Waveform Models,", 2019, proposes a particular, well-known, approach in its chapter 3.2 for anonymization of x-vectors, which is also incorporated herein by reference.

Using the extracted fundamental frequencies, the obtained phonetic posteriorgrams and the anonymized C-vector, a synthesizer 240 then generates the speech output with the anonymized voice.

[1]: "Speaker Anonymization Using X-vector and Neural Waveform Models,", 2019, proposes a particular, well-known, approach in its chapter 3.3 "Waveform Generation", which is also incorporated herein by reference, to obtain the output speech from the anonymized x-vector. See also [2], Fig. 5 and the corresponding explanations in [2].

In the system of Fig. 9, anonymization is primarily derived from anonymization of x-vectors that are associated with the speaker's character.

The inventors have found that it may be beneficial in the system of Fig. 9 to conduct modification of the extracted fundamental frequencies (e.g., in a modification block 217) to further anonymize the voice.

In the following, embodiments of the present invention are provided in detail.

Fig. 1 illustrates a system for conducing voice modification on an audio input signal comprising speech to obtain an audio output signal according to an embodiment.

The system comprises a feature extractor 210 for extracting feature information of the speech from the audio input signal.

Moreover, the system comprises a fundamental frequencies generator 230 to generate modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech.

Furthermore, the system comprises a synthesizer 240 for generating the audio output signal depending on the modified fundamental frequency information and depending on the feature information.

According to an embodiment, the feature information may, e.g., comprise first feature information and second feature information. The system may, e.g., comprise a modifier 220 for generating modified second feature information depending on the second feature information, such that the modified second feature information is different from the second feature information. The fundamental frequencies generator 230 may, e.g., be configured to generate the modified fundamental frequency information using the first feature information and using the modified second feature information. The synthesizer 240 may, e.g., be configured to generate the audio output signal using the modified fundamental frequency information, using the first feature information and using the modified second feature information.

In an embodiment, the first feature information may, e.g., comprise phonetic posteriorgrams or other bottleneck features of the speech. The fundamental frequencies generator 230 may, e.g., be configured to generate the modified fundamental frequency information using the phonetic posteriorgrams or the other bottleneck features of the speech and using the modified second feature information. The synthesizer 240 may, e.g., be configured to generate the audio output signal using the modified fundamental frequency information, using the phonetic posteriorgrams or the other bottleneck features of the speech and using the modified second feature information.

Bottleneck features of the speech may, for example, be phonetic posteriograms of the speech, or may, for example, be triphone-based bottleneck features. (see [17]: P. Champion, D. Jouvet, and A. Larcher, "Speaker information modification in the VoicePrivacy 2020 toolchain". This paper is incorporated by reference. In particular its chapters 1 to 4, are herewith incorporated by reference.) Triphone-based bottleneck features are by default not sanitised of the personal information as the PPGs. Thus semi-adversarial training may, e.g., be useful.

According to an embodiment, the fundamental frequencies generator 230 may, e.g., be implemented as a machine-trained system and/or may, e.g., be implemented as an artificial intelligence system.

In an embodiment, the fundamental frequencies generator 230 may, e.g., be implemented as a neural network, being configured to receive the first feature information and the modified second feature information as input values of the neural network, wherein the output values of the neural network comprise the modified fundamental frequencies and/or indicate the modified fundamental frequencies trajectory.

According to an embodiment, the neural network of the fundamental frequencies generator 230 may, e.g., comprise one or more fully connected layers such that each node of the one or more fully connected layers depends on all input values of the neural network, such that each node of the fully connected layers depends on the first feature information and depends on the modified second feature information.

In an embodiment, the neural network of the fundamental frequencies generator (230) has been trained by conducting supervised training of the neural network using fundamental frequencies and/or fundamental frequency trajectories of speech signals.

According to an embodiment, the neural network of the fundamental frequencies generator 230 may, e.g., be a first neural network. The modifier 220 may, e.g., be implemented as a second neural network. The second neural network may, e.g., be configured to receive input values from a plurality of frames of the audio input signal. The second neural network may, e.g., be configured to output the second feature information as its output values.

In an embodiment, the second feature information may, e.g., be an x-vector of the speech.

According to an embodiment, the modifier 220 may, e.g., be configured to generate a modified x-vector as the modified second feature information by choosing, depending on the x-vector of the speech, an x-vector from a group of available x-Vectors, such the x-vector being chosen from the group of x-vectors is different from the x-vector of the speech. The first neural network of the fundamental frequencies generator 230 may, e.g., be configured to receive the phonetic posteriorgrams or the other bottleneck features of the speech and the modified x-vector as the input values of the first neural network, and may, e.g., be configured to output its output values comprising the modified fundamental frequencies and/or indicating the modified fundamental frequencies trajectory. The synthesizer 240 may, e.g., be configured to generate the audio output signal using the phonetic posteriorgrams or the other bottleneck features of the speech and using the modified x-vector and depending on the output values of the first neural network that comprise the modified fundamental frequencies and/or that indicate the modified fundamental frequencies trajectory.

In an embodiment, system may, e.g., further comprise an output value modifier 235 for modifying the output values of the first neural network of the fundamental frequencies generator 230 to obtain amended values that comprise amended fundamental frequencies and/or that indicate an amended fundamental frequencies trajectory. The synthesizer 240 may, e.g., be configured to generate the audio output signal using the phonetic posteriorgrams or the other bottleneck features of the speech, using the modified x-vector and using the amended values.

According to an embodiment, the system may, e.g., further comprise a fundamental frequencies extractor 216 for extracting the real fundamental frequencies of the speech. The system may, e.g., comprise a second fundamental frequencies generator 231 for generating second fundamental frequency information using the phonetic posteriorgrams or the other bottleneck features of the speech and using the x-vector of the speech. The system may, e.g., further comprise a first combiner 232 (e.g., a subtractor 232) for generating (e.g., subtracting), depending on the real fundamental frequencies of the speech and depending on the second fundamental frequency information, values indicating a fundamental frequencies residuum. The system may, e.g., comprise a second combiner for combining (e.g., adding) the output values of the first neural network of the fundamental frequencies generator 230 and the values indicating the fundamental frequencies residuum to obtain combined values. The synthesizer 240 may, e.g., be configured to generate the audio output signal using the phonetic posteriorgrams or the other bottleneck features of the speech and using the modified x-vector and depending on the combined values.

In an embodiment, the synthesizer 240 may, e.g., be implemented as a neural vocoder and/or may, e.g., be implemented as a machine-trained system and/or may, e.g., be implemented as an artificial intelligence system and/or may, e.g., be implemented as a neural network.

According to an embodiment, the system may, e.g., be a system for conducting voice anonymization. The speech in the audio input signal may, e.g., be speech that has not been anonymized. The modifier 220 may, e.g., be an anonymizer 221 for generating anonymized second feature information as the modified second feature information depending on the second feature information, such that the anonymized second feature information may, e.g., be different from the second feature information. The fundamental frequencies generator 230 may, e.g., be configured to generate anonymized fundamental frequency information as the modified fundamental frequency information using the first feature information and using the anonymized second feature information. The synthesizer 240 may, e.g., be configured to generate the audio output signal using the anonymized fundamental frequency information, using the first feature information and using the anonymized second feature information.

In an embodiment, the system may, e.g., be a system for conducting voice de-anonymization. The speech in the audio input signal may, e.g., be speech that has been anonymized. The modifier 220 may, e.g., be a de-anonymizer 222 for generating de-anonymized second feature information as the modified second feature information depending on the second feature information, such that the de-anonymized second feature information may, e.g., be different from the second feature information. The fundamental frequencies generator 230 may, e.g., be configured to generate de-anonymized fundamental frequency information as the modified fundamental frequency information using the first feature information and using the de-anonymized second feature information. The synthesizer 240 may, e.g., be configured to generate the audio output signal using the de-anonymized fundamental frequency information, using the first feature information and using the de-anonymized second feature information.

According to an embodiment, the speech in the audio input signal may, e.g., be speech that has been anonymized according to a first mapping rule. The de-anonymizer 222 may, e.g., be configured to generating de-anonymized second feature information depending on the second feature information using a second mapping rule that depends on the first mapping rule. For example, the first and the second mapping rule may, e.g., define a mapping from an x-vector of the speech to a modified x-vector. Or, the first and the second mapping rule may, e.g., define a rule for selecting an x-vector from a plurality of x-vectors as a selected x-vector/as a modified x-vector depending on an (extracted) x-vector of the speech in the audio input signal.

In an embodiment, the system may, e.g., be configured to receive the information on the second mapping rule by receiving a bitstream that comprises the information on the second mapping rule. Or, the system may, e.g., be configured to receive information on the first mapping rule by receiving a bitstream that comprises the information on the first mapping rule, and the system may, e.g., be configured to derive information on the second mapping rule from the information on the first mapping rule.

Moreover, a system is provided. The system comprises a system for conducting voice anonymization, and a system for conducting voice de-anonymization. The system for conducting voice anonymization may, e.g., be configured to generate an audio output signal comprising speech that may, e.g., be anonymized. The system for conducting voice de-anonymization may, e.g., be configured to receive the audio output signal that has been generated by the system for conducting voice anonymization as an audio input signal. Moreover, the system for conducting voice de-anonymization may, e.g., be configured to generate an audio output signal from the audio input signal such that the speech in the audio output signal may, e.g., be de-anonymized.

In the following, particular embodiments of the present invention are described.

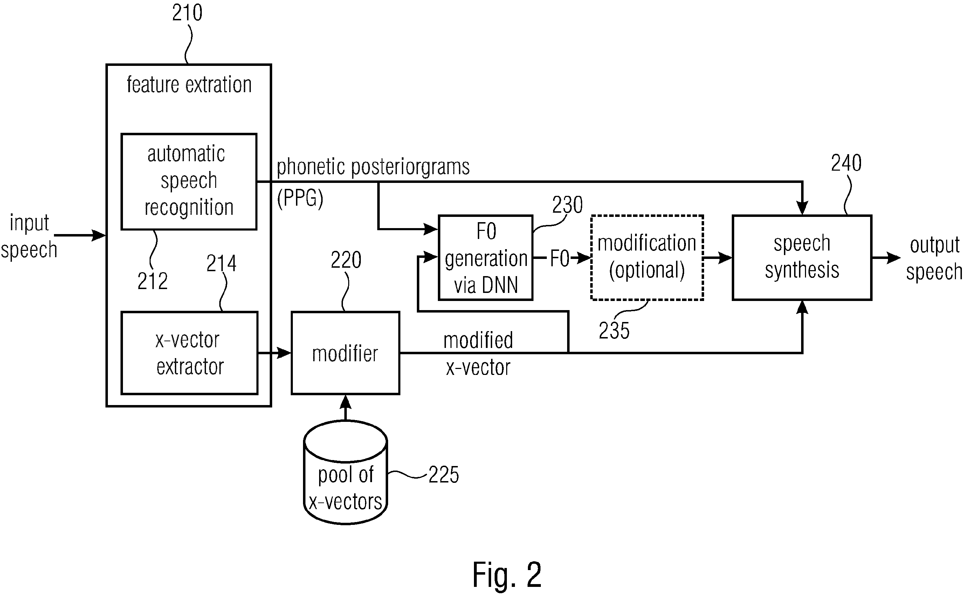

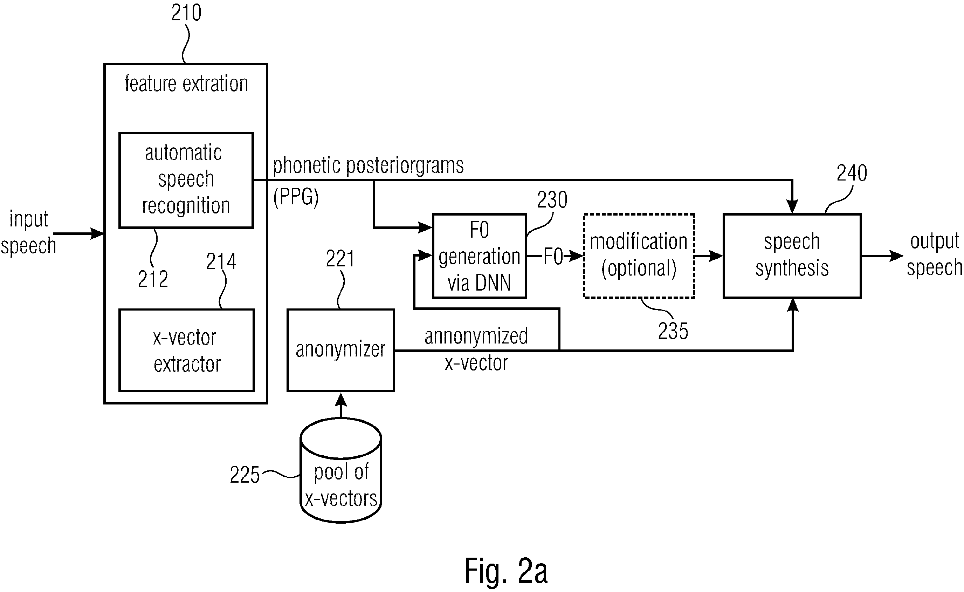

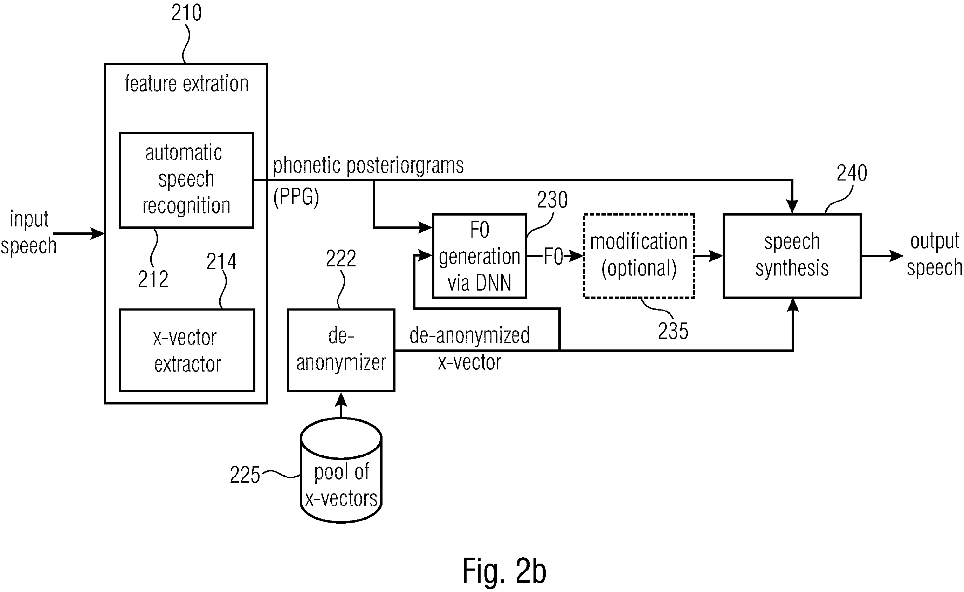

Fig. 2 illustrates a system for voice modification according to an embodiment. Most of the components of the system of Fig. 2 have already been described with respect to Fig. 9.

The embodiment of Fig. 2 particularly differs from the system of Fig. 9 in that feature extractor 210 of Fig. 2 does not comprise a fundamental frequencies extractor.

Instead, the system of Fig. 2 comprises a fundamental frequencies generator 230 to generate modified fundamental frequencies.

For this purpose, in Fig. 2, the fundamental frequencies generator 230 comprises a neural network to generate the modified fundamental frequencies.

Thus, rather than from the input speech, the fundamental frequencies / F0 trajectories (which are then used for the speech synthesis, e.g., in synthesizer 240) are generated from the modified x-vector and from the phonetic posteriorgrams or from the other bottleneck features using the neural network, e.g., using a Deep Neural Network (DNN).

Optionally, the system may, for example, also comprise an output value modifier 235 to further modify the modified fundamental frequencies after they have been created (see modification block 217 in Fig. 9). The further modification of the fundamental frequencies may, e.g., be conducted as proposed in [4], in particular, chapter 4 of [4], which is hereby incorporated by reference.

Fig. 2a illustrates a system for voice anonymization according to an embodiment. The speech in the audio input signal is speech that has not been anonymized. In the audio output signal the speech shall be anonymized. In Fig. 2a, the modifier of Fig. 2 is implemented an anonymizer 221 to generate an anonymized x-vector as the modified x-vector.

Fig. 2b illustrates a system for voice de-anonymization according to an embodiment. The speech in the audio input signal is speech that has already been anonymized. In the audio output signal the speech shall be de-anonymized. In Fig. 2b, the modifier of Fig. 2 is implemented a de-anonymizer 222 to generate a de-anonymized x-vector as the modified x-vector.

The system of Fig. 2a and the system of Fig. 2b may, e.g., interact in a system, wherein the system of Fig. 2a generates an audio output signal which comprises speech that is anonymized, and wherein the system of Fig. 2b receives the audio output signal of the system of Fig. 2a as an audio input signal and generates an audio output signal in which the speech is de-anonymized.

For example, the generation of the anonymized x-vector from the x-vector of the speech in the audio output signal generated by the system of Fig. 2a may be invertible or at least roughly invertible. The system of Fig. 2b may then extract the x-vector from the anonymized speech, may then generate the x-vector of the original speech therefrom (or may at least generate an estimate of the x-vector of the original speech), may then feed the original x-vector in the fundamental frequency generator 230 to obtain the original fundamental frequency information or at least an estimation of the original fundamental frequency information and may then generate the audio output signal in the synthesizer 240.

The systems of Fig. 2, Fig. 2a and Fig. 2b provide a plurality of advantages:
For example, a better disentangling of the input speech may, e.g., be achieved by not using F0 trajectories derived from input speech. This results in significantly better voice modification / anonymization / de-anonymization.

Moreover, a potentially better speech synthesis quality may, e.g., be achieved because of harmonized input features.

Furthermore, the provided concept does not affect the word error rate of the modified voice. Moreover, a framewise performance may, e.g., be obtained.

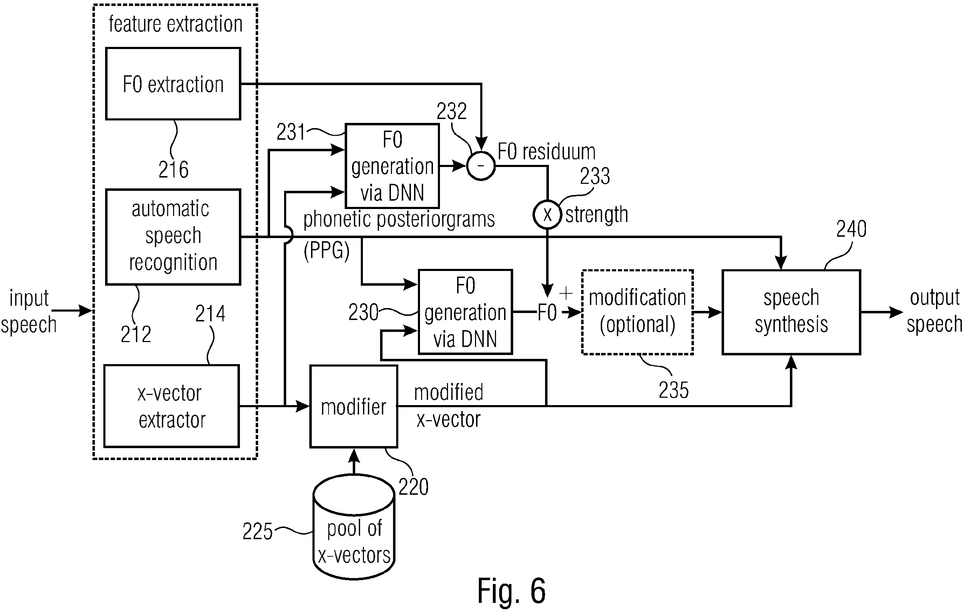

Moreover, complexity reduction is achieved by the embodiment of Fig. 2, as no F0 feature extraction is necessary. However, other embodiments, such as the embodiment of Fig. 6, may, e.g., still employ F0 feature extraction block, as will be described later on.

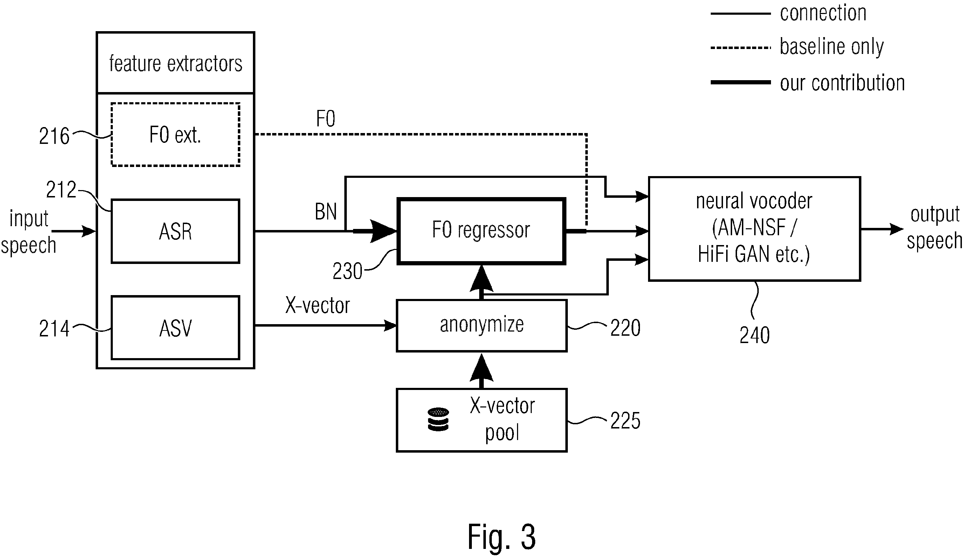

Fig. 3 illustrates a system for voice anonymization according to an embodiment, which comprises a fundamental frequencies (F0) generator being implemented as an F0 regressor 230 . As well as the embodiment of Fig. 2, the embodiment of Fig. 3 comprises new and inventive modifications compared to the baseline B1 system that has for example been described in [1].

Inter alia, Fig. 3 provides signal flow diagrams of the baselines B1.a (if neural vocoder is an AM-NSF), B1.b (if neural vocoder is NSF with GAN) and joint-hifigan (if neural vocoder is the original HiFi-GAN), which show, how the new, provided F0 regressor is integrated in such a system.

In the following, a regression DNN for F0 trajectories according to an embodiment is described.

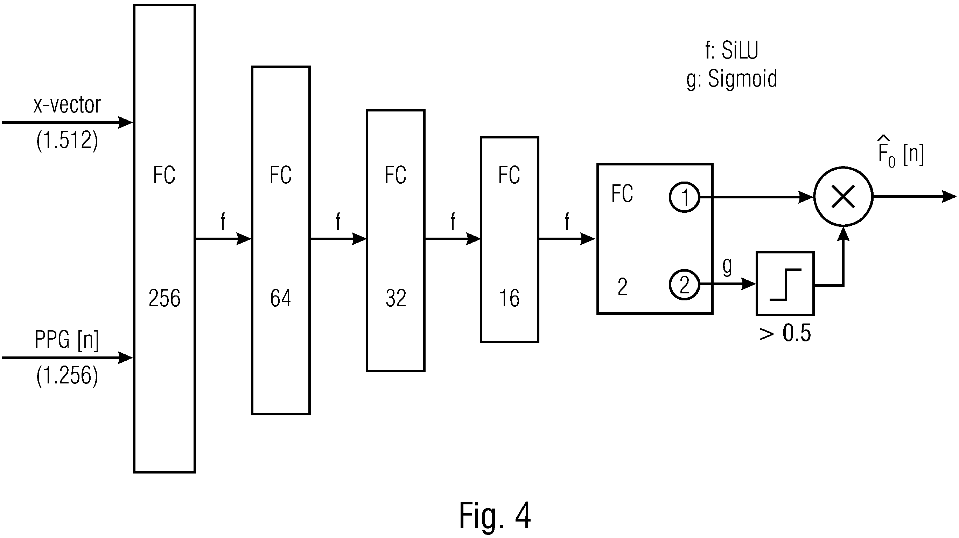

Fig. 4 illustrates a shallow deep neural network (DNN) for frame-wise predicting F0 trajectories from the utterance level x-vectors and the BNs according to an embodiment.

In particular, Fig. 4 illustrates an architecture of a neural network according to an embodiment. The numbers below the expression "FC" denote the number of neurons in each layer. "FC" denotes a fully connected layer. The circles with numbers 1, 2 in the last layer denote the output of n-th neuron in that layer (after dropout if applicable).

Fig. 5 illustrates a fully connected layer according to an embodiment. The fully connected layer according to an embodiment may, e.g., comprises of a linear layer followed by a dropout layer, where the dropout probability is p. The circles with numbers 1, 2, ... ,N denote the number of the neuron in that layer.

In an embodiment, F0 trajectories may, e.g., be predicted in logarithmic scale with a global mean-variance normalization. Two output neurons in the last layer signify the predicted pitch value $\hat{F}_0[n]$ (no activation function) and the probability of the frame signifying a voiced sound $p_v[n]$ (sigmoid activation function). According to this probability, the F0 value for the frame is either passed as is (if the probability is greater than 0.5), or zeroed out (otherwise). The loss function $\mathcal{L}$ for a batched input is provided in Equation 1 below, where 'MSE( $\cdot$ )' and 'BCE( $\cdot$ )' denote the 'mean-squared error' and 'binary cross entropy with logits' as implemented by PyTorch. The variable $v$ denotes the voiced/unvoiced label of the frame and $\alpha$ denotes a trade-off parameter balancing the classification and regression tasks.

$$\mathcal{L}(F_0, \hat{F}_0) = \text{MSE}(F_0 - \hat{F}_0)^2 + \alpha\text{BCE}(p_v, v), \tag{1}$$

Fig. 6 illustrates a system for voice anonymization according to another embodiment, which, in contrast to the embodiment of Fig. 2, comprises a fundamental frequencies extractor 216.

As in the embodiment of Fig. 2, the system of Fig. 6 comprises a fundamental frequencies generator 230 which generates the modified fundamental frequencies in the same way as in the embodiment of Fig. 2 from the modified x-vector and from the obtained phonetic posteriorgrams, e.g., by using a neural network. Afterwards, however, the modified fundamental frequencies are again altered:
In Fig. 6, another fundamental frequencies generator 231 exists, which generates artificial fundamental frequencies, for example, in the same way as the fundamental frequencies generator 230, likewise using a neural network. To generate the artificial fundamental frequencies, the other fundamental frequencies generator 231 also uses the obtained phonetic posteriorgrams, but uses the obtained x-vector that has been obtained from the input speech instead of using the modified x-vector.

Then, in subtractor 232, a subtraction is conducted between the real fundamental frequencies, extracted from the input speech by the fundamental frequencies extractor 216, and the artificial fundamental frequencies, generated by the other fundamental frequencies generator 231. What remains after the subtraction is an F0 residuum that still comprises, for example, the excitation of the input speech but without the real fundamental frequencies.

Optionally, a strength 233 may, e.g., amplify or attenuate this F0 residuum. The strength control 233 may, e.g., thus allow leakage of utterance-specific F0 character to be added to the speech synthesis.

A combiner (not shown) may, e.g., then combine (for example, add) the F0 residuum to the modified fundamental frequencies generated by fundamental frequencies generator 230.

This approach realizes to keep some signal properties of the input speech that are not related to the fundamental frequencies also in the output speech.

In the following, training strategies and hyperparameter optimization are considered.

A DNN according to an embodiment, may, e.g., be implemented using PyTorch [9], and may, e.g., be trained using PyTorch Ignite [10].

All files in the libri-dev-* and vctk-dev-* subsets may, e.g., be concatenated into a single tall matrix, then a random (90%, 10%) train-validation split is performed, allowing frames from different utterances to be present in a single batch. In an embodiment, early stopping after 10 epochs is employed without improvement and learning rate reduction (multiplication by 0.1 after 5 epochs without improvement in validation loss).

For prior art systems, OpTuna [11] tunes the learning rate lr, the trade-off parameter $\alpha$ and the dropout probability p. Optimal values obtained after 50 trials are listed in Table 1. However, the inventors have found that a system according to an embodiment may, e.g., perform better without dropout. Thus, for some embodiments, $p$ may, e.g., be set to $p = 0$.

| Parameter | Value |
|-----------|---------|
| $\alpha$ | 0.00022 |
| lr | 0,0007 |
| p | 0.0 |

The above table depicts hyperparameter values obtained using OpTuna.

In the following, embodiments of the present invention are evaluated.

Regarding an analysis of the generated F0 trajectories, the inventors have verified the performance of our F0 regressor by visualizing the reconstructions for matched x-vectors and cross-gender x-vectors. The latter allows to evaluate the generalization capabilities.

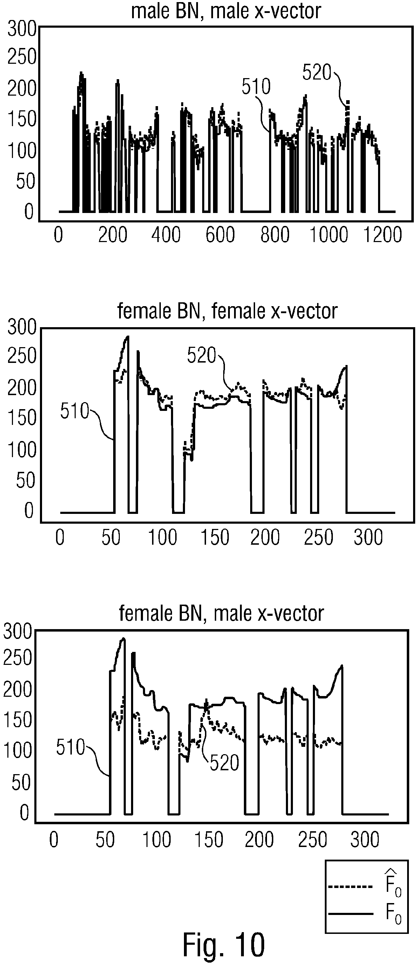

Fig. 10 illustrates ground truth F0 estimates (510, orange) for the input signal, obtained by YAAPT [12] (F0 extractor of the B1 baselines) together with the F0 estimates obtained by a system according to an embodiment (520, blue).

In Fig. 10, the F0 estimates for unaltered target and source speakers (subplots 1 and 2) as well as a cross-gender F0 conversion is given (subplot 3) for the linguistic features from the female speaker and the x-vector from the male speaker. Resulting estimated F0 trajectory has a mean shift of roughly 60 Hz and correctly identifies voiced and unvoiced frames.

Evaluation has also been conducted with respect to a challenge framework. The inventors have executed evaluation scripts provided by the challenge organizers. As a system according to a particular embodiment did not include a tunable parameter that governs the trade-off between the equal error rate (EER) and WER, the inventors have submitted a single set of results.

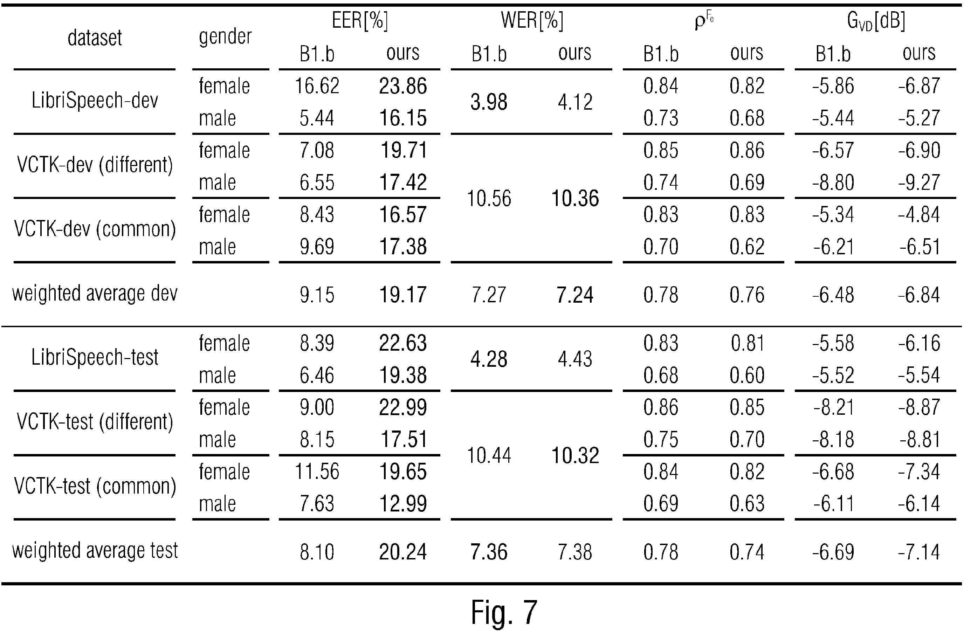

Fig. 7 illustrates a table which depicts evaluation results for embodiments of the present invention. In particular, the table of Fig. 7 depicts results from a Baseline B1.b variant joint-hifigan taken from [14] compared with a version according to an embodiment. Better performing entries are highlighted for the primary metrics EER and WER.

As can be seen from the table of Fig. 7, in the evaluation the system according to an embodiment significantly outperforms the Baseline B1.b variant joint-hifigan in terms of EER. Furthermore, in the evaluation, the EER according to an embodiment performs also significantly better than any other baseline system (c.f. [13]). For the VCTK conditions the WER scores also improve. For every data subset the pitch correlation $\rho^{F0}$ resides in the accepted interval [0.3, 1] and the voice distinctiveness $G_{VD}$ is comparable to the baseline of the system according to an embodiment.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] F. Fang, X. Wang, J. Yamagishi, I. Echizen, M. Todisco, N. Evans, and J.-F. Bonastre, "Speaker Anonymization Using X-vector and Neural Waveform Models," arXiv:1905.13561 [cs, eess, stat], 2019, 00061 arXiv: 1905.13561. [Online]. Available: http://arxiv.org/abs/1905.13561

[2] N. Tomashenko, X. Wang, E. Vincent, J. Patino, B. M. L. Srivastava, P.-G. Noe, A. Nautsch, N. Evans, J. Yamagishi, B. O'Brien, A. Chanclu, J.-F. Bonastre, M. Todisco, and M. Maouche, "The VoicePrivacy 2020 Challenge: Results and findings," Computer Speech & Language, vol. 74, p. 101362, 2022, 00015 arXiv:2109.00648 [cs, eess]. [Online]. Available: http://arxiv.org/abs/2109.00648

[3] P. Champion, D. Jouvet, and A. Larcher, "A Study of F0 Modification for X-Vector Based Speech Pseudonymization Across Gender," arXiv:2101.08478 [cs, eess], Jan. 2021, 00009 arXiv: 2101.08478. [Online]. Available: http://arxiv.org/abs/2101.08478

[4] U. E. Gaznepoglu and N. Peters, "Exploring the Importance of F0 Trajectories for Speaker Anonymization using X-vectors and Neural Waveform Models," Workshop on Machine Learning in Speech and Language Processing 2021, Sep. 2021, 00002. [Online]. Available: https://arxiv.org/abs/2110.06887v1

[5] L. Tavi, T. Kinnunen, and R. G. Hautamäki, "Improving speaker de-identification with functional data analysis of f0 trajectories," Speech Communication, vol. 140, pp. 1-10, May 2022, 00000 arXiv:2203.16738 [cs, eess]. [Online]. Available: http://arxiv.org/abs/2203.16738

[6] V. Peddinti, D. Povey, and S. Khudanpur, "A time delay neural network architecture for efficient modeling of long temporal contexts," in Interspeech 2015. ISCA, Sep. 2015, pp. 3214-3218, 00991. [Online]. Available: https://www.isca-speech.org/archive/interspeech 2015/peddinti15b interspeech.html

[7] S. Johar, "Psychology of Voice," in Emotion, Affect and Personality in Speech: The Bias of Language and Paralanguage, ser. SpringerBriefs in Electrical and Computer Engineering, S. Johar, Ed. Cham: Springer International Publishing, 2016, pp. 9-15, 00014. [Online]. Available: https://doi.org/10.1007/978-3-319-28047-9 2

[8] X. Wang and J. Yamagishi, "Neural Harmonic-plus-Noise Waveform Model with Trainable Maximum Voice Frequency for Text-to-Speech Synthesis," arXiv:1908.10256 [cs, eess], Aug. 2019, 00027 arXiv: 1908.10256. [Online]. Available: http://arxiv.org/abs/1908.10256

[9] A. Paszke, S. Gross, F. Massa, A. Lerer, J. Bradbury, G. Chanan, T. Killeen, Z. Lin, N. Gimelshein, L. Antiga, A. Desmaison, A. Kopf, E. Yang, Z. DeVito, M. Raison, A. Tejani, S. Chilamkurthy, B. Steiner, L. Fang, J. Bai, and S. Chintala, "PyTorch: An Imperative Style, High-Performance Deep Learning Library," in Advances in neural information processing systems (NeurIPS), Vancouver, Canada, 2019, p. 12, 17858.

[10] V. Fomin, J. Anmol, S. Desroziers, J. Kriss, and A. Tejani, "High-level library to help with training neural networks in PyTorch," 2020, 00014 Publication Title: GitHub repository. [Online]. Available: https://github.com/pytorch/ignite

[11] "Optuna: A Next-generation Hyperparameter Optimization Framework," Jul. 2019, 01169 Number: arXiv:1907.10902 arXiv:1907.10902 [cs, stat]. [Online]. Available: http://arxiv.org/abs/1907.10902

[12] K. C. Ho and M. Sun, "An Accurate Algebraic Closed-Form Solution for Energy-Based Source Localization," IEEE Transactions on Audio, Speech, and Language Processing, vol. 15, no. 8, pp. 2542-2550, Nov. 2007, 00111 Conference Name: IEEE Transactions on Audio, Speech, and Language Processing.

[13] N. Tomashenko, X. Wang, X. Miao, H. Nourtel, P. Champion, M. Todisco, E. Vincent, N. Evans, J. Yamagishi, and J. F. Bonastre, "The voiceprivacy 2022 challenge evaluation plan," arXiv preprint arXiv:2203.12468, 2022.

[14] (2022) Baseline results for joint-hifigan. (last accessed 2022-07-31). [Online]. Available: https://github.com/Voice-Privacy-Challenge/Voice-Privacy-Challenge-2022/blob /master/baseline/results/RESULTS summary tts joint hifigan

[15] Snyder, David et al. "X-Vectors: Robust DNN Embeddings for Speaker Recognition." 2018 IEEE International Conference on Acoustics, Speech and Signal Processing (ICASSP) (2018): 5329-5333.

[16] I. Siegert, "Speaker anonymization solution for public voice-assistant interactions-Presentation of a Work in Progress Development." Proc. 2021 ISCA Symposium on Security and Privacy in Speech Communication. 2021.

[17] P. Champion, D. Jouvet, and A. Larcher, "Speaker information modification in the VoicePrivacy 2020 toolchain," INRIA Nancy, equipe Multispeech; LIUM - Laboratoire d'Informatique de l'Université du Mans, Research Report, Nov. 2020. Accessed: Jun. 22, 2021. [Online]. Available: https://hal.archives-ouvertes.fr/hal-02995855

[18] Chazan, Shlomo & Goldberger, Jacob & Gannot, Sharon, "Speech Enhancement using a Deep Mixture of Experts," 2017 [Online]. Available: https://arxiv.org/abs/1703.09302

**Claims**

1. A system for conducing voice modification on an audio input signal comprising speech to obtain an audio output signal, wherein the system comprises:

   a feature extractor (210; 212, 214) for extracting feature information of the speech from the audio input signal, a fundamental frequencies generator (230) for generating modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech, and a synthesizer (240) for generating the audio output signal depending on the modified fundamental frequency information and depending on the feature information.

2. A system according to claim 1,

   wherein the feature information comprises first feature information and second feature information, wherein the system comprises a modifier (220; 221; 222) for generating modified second feature information depending on the second feature information, such that the modified second feature information is different from the second feature information, wherein the fundamental frequencies generator (230) is configured to generate the modified fundamental frequency information using the first feature information and using the modified second feature information, and wherein the synthesizer (240) is configured to generate the audio output signal using the modified fundamental frequency information, using the first feature information and using the modified second feature information.

3. A system according to claim 2,

   wherein the first feature information comprises phonetic posteriorgrams or other bottleneck features of the speech, wherein the fundamental frequencies generator (230) is configured to generate the modified fundamental frequency information using the phonetic posteriorgrams or the other bottleneck features of the speech and using the modified second feature information, and wherein the synthesizer (240) is configured to generate the audio output signal using the modified fundamental frequency information, using the phonetic posteriorgrams or the other bottleneck features of the speech and using the modified second feature information.

4. A system according to claim 2 or 3, wherein the fundamental frequencies generator (230) is implemented as a machine-trained system and/or is implemented as an artificial intelligence system.

5. A system according to claim 4, further depending on claim 2 or 3, wherein the fundamental frequencies generator (230) is implemented as a neural network, being configured to receive the first feature information and the modified second feature information as input values of the neural network, wherein the output values of the neural network comprise the modified fundamental frequencies and/or indicate the modified fundamental frequencies trajectory.

6. A system according to claim 5, wherein the neural network of the fundamental frequencies generator (230) comprises one or more fully connected layers such that each node of the one or more fully connected layers depends on all input values of the neural network, such that each node of the fully connected layers depends on the first feature information and depends on the modified second feature information.

7. A system according to claim 5 or 6, wherein the neural network of the fundamental frequencies generator (230) has been trained by conducting training of the neural network using fundamental frequencies and/or fundamental frequency trajectories of speech signals.

8. A system according to one of claims 5 to 7,

wherein the neural network of the fundamental frequencies generator (230) is a first neural network,

wherein the modifier (220; 221; 222) is implemented as a second neural network,

wherein the second neural network is configured to receive input values from a plurality of frames of the audio input signal,

wherein the second neural network is configured to output the second feature information as its output values.

9. A system according to claim 8,
wherein the second feature information is an x-vector of the speech.

10. A system according to claim 9, further depending on claim 3,

wherein the modifier (220; 221; 222) is configured to generate a modified x-vector as the modified second feature information by choosing, depending on the x-vector of the speech, an x-vector from a group of available x-Vectors, such the x-vector being chosen from the group of x-vectors is different from the x-vector of the speech;

wherein the first neural network of the fundamental frequencies generator (230) is configured to receive the phonetic posteriorgrams or the other bottleneck features of the speech and is configured to receive the modified x-vector as the input values of the first neural network, and is configured to output its output values comprising the modified fundamental frequencies and/or indicating the modified fundamental frequencies trajectory; and

wherein the synthesizer (240) is configured to generate the audio output signal using the phonetic posteriorgrams or the other bottleneck features of the speech and using the modified x-vector and depending on the output values of the first neural network that comprise the modified fundamental frequencies and/or that indicate the modified fundamental frequencies trajectory.

11. A system according to one of claims 8 to 10,

wherein system further comprises an output value modifier (235) for modifying the output values of the first neural network of the fundamental frequencies generator (230) to obtain amended values that comprise amended fundamental frequencies and/or that indicate an amended fundamental frequencies trajectory, and

wherein the synthesizer (240) is configured to generate the audio output signal using the phonetic posteriorgrams or the other bottleneck features of the speech, using the modified x-vector and using the amended values.

12. A system according to claim 10 or 11,

wherein the system further comprises a fundamental frequencies extractor (216) for extracting the real fundamental frequencies of the speech,

wherein the system comprises a second fundamental frequencies generator (231) for generating second fundamental frequency information using the phonetic posteriorgrams or the other bottleneck features of the speech and using the x-vector of the speech,

wherein the system further comprises a first combiner (232) for generating, depending on the real fundamental frequencies of the speech and depending on the second fundamental frequency information, values indicating a fundamental frequencies residuum,

wherein the system comprises a second combiner for combining the output values of the first neural network of the fundamental frequencies generator (230) and the values indicating the fundamental frequencies residuum to obtain combined values, and

wherein the synthesizer (240) is configured to generate the audio output signal depending on the combined values, using the phonetic posteriorgrams or the other bottleneck features of the speech and using the modified x-vector.

13. A system according to one of claims 4 to 12,
wherein the synthesizer (240) is implemented as a neural vocoder and/or is implemented as a machine-trained system and/or is implemented as an artificial intelligence system and/or is implemented as a neural network.

14. A system according to one of claims 2 to 13,

wherein the system is a system for conducting voice anonymization,

wherein the speech in the audio input signal is speech that has not been anonymized,

wherein the modifier (220; 221; 222) is an anonymizer (221) for generating anonymized second feature information as the modified second feature information depending on the second feature information, such that the anonymized second feature information is different from the second feature information,
wherein the fundamental frequencies generator (230) is configured to generate anonymized fundamental frequency information as the modified fundamental frequency information using the first feature information and using the anonymized second feature information, and
wherein the synthesizer (240) is configured to generate the audio output signal using the anonymized fundamental frequency information, using the first feature information and using the anonymized second feature information.

15. A system according to one of claims 2 to 13,

wherein the system is a system for conducting voice de-anonymization,
wherein the speech in the audio input signal is speech that has been anonymized,
wherein the modifier (220; 221; 222) is a de-anonymizer (222) for generating de-anonymized second feature information as the modified second feature information depending on the second feature information, such that the de-anonymized second feature information is different from the second feature information,
wherein the fundamental frequencies generator (230) is configured to generate de-anonymized fundamental frequency information as the modified fundamental frequency information using the first feature information and using the de-anonymized second feature information, and
wherein the synthesizer (240) is configured to generate the audio output signal using the de-anonymized fundamental frequency information, using the first feature information and using the de-anonymized second feature information.

16. A system according to claim 15,

wherein the speech in the audio input signal is speech that has been anonymized according to a first mapping rule,
wherein the de-anonymizer (222) is configured to generating de-anonymized second feature information depending on the second feature information using a second mapping rule that depends on the first mapping rule.

17. A system according to claim 16,

wherein the system is configured to receive information on the second mapping rule by receiving a bitstream that comprises the information on the second mapping rule; or
wherein the system is configured to receive information on the first mapping rule by receiving a bitstream that comprises the information on the first mapping rule, and wherein the system is configured to derive information on the second mapping rule from the information on the first mapping rule.

18. A system comprising:

a system according to claim 14 for conducting voice anonymization, and
a system according to one of claims 15 to 17 for conducting voice de-anonymization,
wherein the system for conducting voice anonymization is configured to generate an audio output signal comprising speech that is anonymized,
wherein the system for conducting voice de-anonymization is configured to receive the audio output signal that has been generated by the system for conducting voice anonymization as an audio input signal, and
wherein the system for conducting voice de-anonymization is configured to generate an audio output signal from the audio input signal such that the speech in the audio output signal is de-anonymized.

19. A method for conducing voice modification on an audio input signal comprising speech to obtain an audio output signal, wherein the method comprises:

extracting feature information of the speech from the audio input signal,
generating modified fundamental frequency information depending on the feature information, such that the modified fundamental frequency information comprises modified fundamental frequencies being different from real fundamental frequencies of the speech, and/or such that the modified fundamental frequency information indicates a modified fundamental frequency trajectory being different from a real fundamental frequency trajectory of the speech, and
generating the audio output signal depending on the modified fundamental frequency information and depending on the feature information.

**20.** A computer program for implementing the method of claim 19 when being executed on a computer or signal processor.

audio input signal →

210

feature extractor

— feature information →

230

fundamental frequencies generator

— fundamental frequencies →

240

synthesizer

→ audio output signal

**Fig. 1**

Fig. 2

EP 4 318 472 A1

Fig. 2a

EP 4 318 472 A1

Fig. 2b

Fig. 3

Fig. 4

Fig. 5

Fig. 6

EP 4 318 472 A1

| dataset | gender | EER[%] | | WER[%] | | $\rho^{F_0}$ | | $G_{VD}[dB]$ | |
|---|---|---|---|---|---|---|---|---|---|
| | | B1.b | ours | B1.b | ours | B1.b | ours | B1.b | ours |
| LibriSpeech-dev | female | 16.62 | 23.86 | 3.98 | 4.12 | 0.84 | 0.82 | -5.86 | -6.87 |
| | male | 5.44 | 16.15 | | | 0.73 | 0.68 | -5.44 | -5.27 |
| VCTK-dev (different) | female | 7.08 | 19.71 | 10.56 | 10.36 | 0.85 | 0.86 | -6.57 | -6.90 |
| | male | 6.55 | 17.42 | | | 0.74 | 0.69 | -8.80 | -9.27 |
| VCTK-dev (common) | female | 8.43 | 16.57 | | | 0.83 | 0.83 | -5.34 | -4.84 |
| | male | 9.69 | 17.38 | | | 0.70 | 0.62 | -6.21 | -6.51 |
| weighted average dev | | 9.15 | 19.17 | 7.27 | 7.24 | 0.78 | 0.76 | -6.48 | -6.84 |
| LibriSpeech-test | female | 8.39 | 22.63 | 4.28 | 4.43 | 0.83 | 0.81 | -5.58 | -6.16 |
| | male | 6.46 | 19.38 | | | 0.68 | 0.60 | -5.52 | -5.54 |
| VCTK-test (different) | female | 9.00 | 22.99 | 10.44 | 10.32 | 0.86 | 0.85 | -8.21 | -8.87 |
| | male | 8.15 | 17.51 | | | 0.75 | 0.70 | -8.18 | -8.81 |
| VCTK-test (common) | female | 11.56 | 19.65 | | | 0.84 | 0.82 | -6.68 | -7.34 |
| | male | 7.63 | 12.99 | | | 0.69 | 0.63 | -6.11 | -6.14 |
| weighted average test | | 8.10 | 20.24 | 7.36 | 7.38 | 0.78 | 0.74 | -6.69 | -7.14 |

Fig. 7

EP 4 318 472 A1

speech frame

LPC
analysis

coefficients

residuals

LPC
to
poles

poles (lm==0)

poles
to
LPC

poles (lm~=0)

$\phi^{\alpha}$

resynthesis

anonymized
speech frame

Fig. 8

EP 4 318 472 A1

Fig. 9

Fig. 10

Europäisches
Patentamt

European
Patent Office

Office européen
des brevets

# EUROPEAN SEARCH REPORT

Application Number

EP 22 18 9150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/082333 A1 (NURMINEN JANI K [FI] ET AL) 3 April 2008 (2008-04-03) | 1,19,20 | INV. G10L21/013 |
| A | * paragraphs [0001], [0014], [0026], [0038], [0047], [0066] – [0077] * <br> * figures 4A, 4B * | 2-18 | |
| X | LI RUNNAN ET AL: "DBLSTM-based multi-task learning for pitch transformation in voice conversion", <br> 2016 10TH INTERNATIONAL SYMPOSIUM ON CHINESE SPOKEN LANGUAGE PROCESSING (ISCSLP), IEEE, <br> 17 October 2016 (2016-10-17), pages 1-5, XP033092599, <br> DOI: 10.1109/ISCSLP.2016.7918466 <br> [retrieved on 2017-05-02] | 1,19,20 | |
| A | * section 3.1 * <br> * figure 1 * | 2-18 | |
| X | JIANCHUN MA ET AL: "Voice Conversion based on Joint Pitch and Spectral Transformation with Component Group-GMM", <br> NATURAL LANGUAGE PROCESSING AND KNOWLEDGE ENGINEERING, 2005. IEEE NLP- KE '05. PROCEEDINGS OF 2005 IEEE INTERNATIONAL CONFERENCE ON WUHAN, CHINA 30-01 OCT. 2005, PISCATAWAY, NJ, USA,IEEE, PISCATAWAY, NJ, USA, <br> 30 October 2005 (2005-10-30), pages 199-203, XP010896928, <br> DOI: 10.1109/NLPKE.2005.1598734 <br> ISBN: 978-0-7803-9361-5 | 1,19,20 | TECHNICAL FIELDS SEARCHED (IPC) <br><br> G10L |
| A | * abstract * <br> * sections 2.5, 3.1 * <br> * figure 2 * | 2-18 | |

-/--

The present search report has been drawn up for all claims

| Place of search | Date of completion of the search | Examiner |
|---|---|---|
| Munich | 17 January 2023 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 22 18 9150

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QICONG XIE ET AL: "End-to-End Voice Conversion with Information Perturbation", ARXIV.ORG, CORNELL UNIVERSITY LIBRARY, 201 OLIN LIBRARY CORNELL UNIVERSITY ITHACA, NY 14853, 15 June 2022 (2022-06-15), XP091252140, | 1,19,20 | |
| A | * section 2 * <br> * figure 1 * <br> ----- | 2-18 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 17 January 2023 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 18 9150

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | Publication date | Patent family member(s) | Publication date |
|---|---|---|---|
| US 2008082333 A1 | 03-04-2008 | EP 2070084 A2 | 17-06-2009 |
| | | US 2008082333 A1 | 03-04-2008 |
| | | WO 2008038082 A2 | 03-04-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SNYDER et al.** *X-Vectors: Robust DNN Embeddings for Speaker Recognition*
- *Speaker Anonymization Using X-vector and Neural Waveform Models,* 2019
- **P. CHAMPION ; D. JOUVET ; A. LARCHER.** *Speaker information modification in the VoicePrivacy 2020 toolchain*
- **F. FANG ; X. WANG ; J. YAMAGISHI ; I. ECHIZEN ; M. TODISCO ; N. EVANS ; J.-F. BONASTRE.** Speaker Anonymization Using X-vector and Neural Waveform Models. *arXiv:1905.13561 [cs, eess, stat,* 2019, http://arxiv.org/abs/1905.13561
- **N. TOMASHENKO ; X. WANG ; E. VINCENT ; J. PATINO ; B. M. L. SRIVASTAVA ; P.-G. NOE ; A. NAUTSCH ; N. EVANS ; J. YAMAGISHI ; B. O'BRIEN.** The VoicePrivacy 2020 Challenge: Results and findings. *Computer Speech & Language,* 2022, vol. 74, 101362, http://arxiv.org/abs/2109.00648
- **P. CHAMPION ; D. JOUVET ; A. LARCHER.** A Study of F0 Modification for X-Vector Based Speech Pseudonymization Across Gender. *arXiv:2101.08478 [cs, eess,* January 2021, http://arxiv.org/abs/2101.08478
- **U. E. GAZNEPOGLU ; N. PETERS.** Exploring the Importance of F0 Trajectories for Speaker Anonymization using X-vectors and Neural Waveform Models. *Workshop on Machine Learning in Speech and Language Processing,* September 2021, https://arxiv.org/abs/2110.06887v1
- **L. TAVI ; T. KINNUNEN ; R. G. HAUTAMÄKI.** Improving speaker de-identification with functional data analysis of f0 trajectories. *Speech Communication,* May 2022, vol. 140, 1-10, http://arxiv.org/abs/2203.16738
- **V. PEDDINTI ; D. POVEY ; S. KHUDANPUR.** A time delay neural network architecture for efficient modeling of long temporal contexts. *Interspeech 2015. ISCA,* September 2015, 3214-3218, https://www.isca-speech.org/archive/interspeech 2015/peddinti15b interspeech.html
- Psychology of Voice. **S. JOHAR.** Emotion, Affect and Personality in Speech: The Bias of Language and Paralanguage, ser. SpringerBriefs in Electrical and Computer Engineering. Springer International Publishing, 2016, 9-15

- **X. WANG ; J. YAMAGISHI.** Neural Harmonic-plus-Noise Waveform Model with Trainable Maximum Voice Frequency for Text-to-Speech Synthesis. *arXiv:1908.10256 [cs, eess,* August 2019, http://arxiv.org/abs/1908.10256
- **A. PASZKE ; S. GROSS ; F. MASSA ; A. LERER ; J. BRADBURY ; G. CHANAN ; T. KILLEEN ; Z. LIN ; N. GIMELSHEIN ; L. ANTIGA.** PyTorch: An Imperative Style, High-Performance Deep Learning Library. *Advances in neural information processing systems (NeurIPS), Vancouver, Canada,* 2019, 12, , 17858
- **V. FOMIN ; J. ANMOL ; S. DESROZIERS ; J. KRISS ; A. TEJANI.** High-level library to help with training neural networks in PyTorch. *GitHub repository,* 2020, https://github.com/pytorch/ignite
- Optuna: A Next-generation Hyperparameter Optimization Framework. *arXiv:1907.10902 arXiv:1907.10902 [cs, stat,* July 2019, http://arxiv.org/abs/1907.10902
- **K. C. HO ; M. SUN.** An Accurate Algebraic Closed-Form Solution for Energy-Based Source Localization. *IEEE Transactions on Audio, Speech, and Language Processing,* November 2007, vol. 15 (8), 2542-2550
- **N. TOMASHENKO ; X. WANG ; X. MIAO ; H. NOURTEL ; P. CHAMPION ; M. TODISCO ; E. VINCENT ; N. EVANS ; J. YAMAGISHI ; J. F. BONASTRE.** The voiceprivacy 2022 challenge evaluation plan. *arXiv:2203.12468,* 2022
- **SNYDER, DAVID et al.** X-Vectors: Robust DNN Embeddings for Speaker Recognition. *2018 IEEE International Conference on Acoustics, Speech and Signal Processing (ICASSP),* 2018, 5329-5333
- **I. SIEGERT.** Speaker anonymization solution for public voice-assistant interactions-Presentation of a Work in Progress Development. *Proc. 2021 ISCA Symposium on Security and Privacy in Speech Communication.,* 2021
- Speaker information modification in the VoicePrivacy 2020 toolchain. **P. CHAMPION ; D. JOUVET ; A. LARCHER.** Research Report. LIUM - Laboratoire d'Informatique de l'Université du Mans, November 2020
- **CHAZAN ; SHLOMO ; GOLDBERGER ; JACOB ; GANNOT ; SHARON.** *Speech Enhancement using a Deep Mixture of Experts,* 2017, https://arxiv.org/abs/1703.09302